# EUROPEAN PATENT APPLICATION

(11) **EP 2 634 734 A1**
(43) Date of publication of application: **04.09.2013**
(21) Application number: 13157310.7
(22) Date of filing: 28.02.2013
(51) Int. Cl.: G06Q 10/08

(54) **System and method for management of event attendance packages and event attendance inventory**

(30) Priority: 29.02.2012 US 201213408584
(71) Applicant: Jet Set Sports Holdings LP, North Far Hills, NJ 07931 (US)
(72) Inventor: Dizdarevic, Sead, Far Hills, NJ New Jersey 07931 (US); Dizdarevic, Alan Sead, Flanders, NJ New Jersey 07836 (US); Garcia, Mirjana, Bedminster, NJ New Jersey 07921 (US); Karabegovic, Sanjin, New York, NY New York 10011 (US); Chango, Anthony P, Dunellen, NJ New Jersey 08812 (US); Jackson, Stephanie Louise, Norristown, PA Pennsylvania 19401 (US)
(74) Representative: Potter, Julian Mark

(57) **Abstract**

Provided herein are systems and methods for management of event attendance packages and event attendance inventory. The systems and methods include instantiation of a plurality of inventory items relating to attendance of an event. One or more event attendance packages may then be built using the instantiated inventory items. Once an event package is approved, actual inventory items may be secured, and the inventory items may be allocated to a given package so that they are not available for use by other packages. The systems and methods herein may utilize various graphical user interfaces that enable building of virtual inventory, event package construction, actual inventory acquisition, and inventory/package allocation.

## Description

### FIELD

The invention relates generally to systems and methods for the creation and management of hospitality and attendance facilitation programs for events, and more particularly to systems and methods for management of event attendance packages and event attendance inventory.

### BACKGROUND

Attending large events such as, for example, the Olympics or other events can be a complex endeavor. For example, flight reservations, hotel accommodations, dining reservations, event tickets, ground transportation, and/or other items must be planned. Thus, attendance of a large event for a single person can be an unwieldy organizational task. Furthermore, when planning attendance to such events for large groups (e.g., corporate groups), the organizational task set poses an even greater obstacle.

Certain entities (e.g., hospitality program providers) may offer services that facilitate planning large event attendance. However, many of these providers lack a comprehensive and interconnected system for easily handling event attendance for multiple groups having sizes ranging from single attendees to large groups. Furthermore, existing software may not provide adequate interfaces both to hospitality program provider employees as well as customers for management of inventory and attendance packages. These and other drawbacks exist.

### SUMMARY

Provided herein are systems and methods for managing event attendance packages and event attendance inventory. In some implementations, event attendance packages and related inventory may be acquired and provided to customers by a service provider that utilizes an event management application. In some implementations, the event management application may support one or more graphical user interfaces (GUIs) through which internal users, customers, provider entities, and/or other users interact with the service provider. The one or more GUIs may facilitate data/information receipt by the event management application (e.g., by users entering information into a field and/or manipulating data via a GUI). Similarly, the one or more GUI's may provide data display features so as to provide data to various users.

In some implementations, the event management application may include one or more modules that support customer information receipt and retention, event package building and management, as well as one or more modules that relate to different departments of the service provider that enable management of the different types of inventory items used for the event packages.

In some implementations, the event management application may communicate with customer computing devices and provider entity computing systems via a network (e.g., the Internet).

In some implementations, methods for managing event attendance packages and event attendance inventory for such packages may include gathering of estimates of the inventory items needed for facilitating event attendance for a particular event. This may include identifying an estimated number of inventory items for each type of inventory item (e.g., hotel rooms, event tickets, flights, meals, etc.) to be contracted for an event. A virtual inventory may then be built using the estimated inventory quantity as well as the likely availability of specific inventory items. Building this virtual inventory may include acquiring one or more characteristics of inventory items to instantiate virtual inventory items.

In some implementations, one or more packages may be built for customers. Event package building may include receiving requested inventory items from customers. The requested inventory items may then be correlated to items in the virtual inventory. Once virtual (or actual) inventory has been correlated for all requested inventory items for a given package, a proposal may be provided to the customer associated with the package. When approval of the proposal is received from the customer, actual inventory items for each requested inventory items may be obtained (if they have not been already). Once actual inventory has been acquired, its corresponding virtual inventory item may be removed (or the status of the virtual inventory item may be changed) and the actual inventory may be allocated to a given package. In this manner, inventory cannot be allocated to two different packages.

Various other objects, features, and advantages of the invention will be apparent through the detailed description and the drawings attached hereto. It is also to be understood that both the foregoing general description and the following detailed description are exemplary and not restrictive of the scope of the invention.

### BRIEF DESCRIPTION OF THE DRAWINGS

FIG. 1 is an illustration of an example environment wherein a system for managing event attendance packages and related inventory exists, according to various implementations of the invention.

FIG. 2 is an illustration of an example process for managing event attendance packages and related inventory, according to various implementations of the invention.

FIG. 3 is an illustration of an example interface, according to various implementations of the invention.

FIG. 4 is an illustration of an example interface, according to various implementations of the invention.

### DETAILED DESCRIPTION OF THE INVENTION

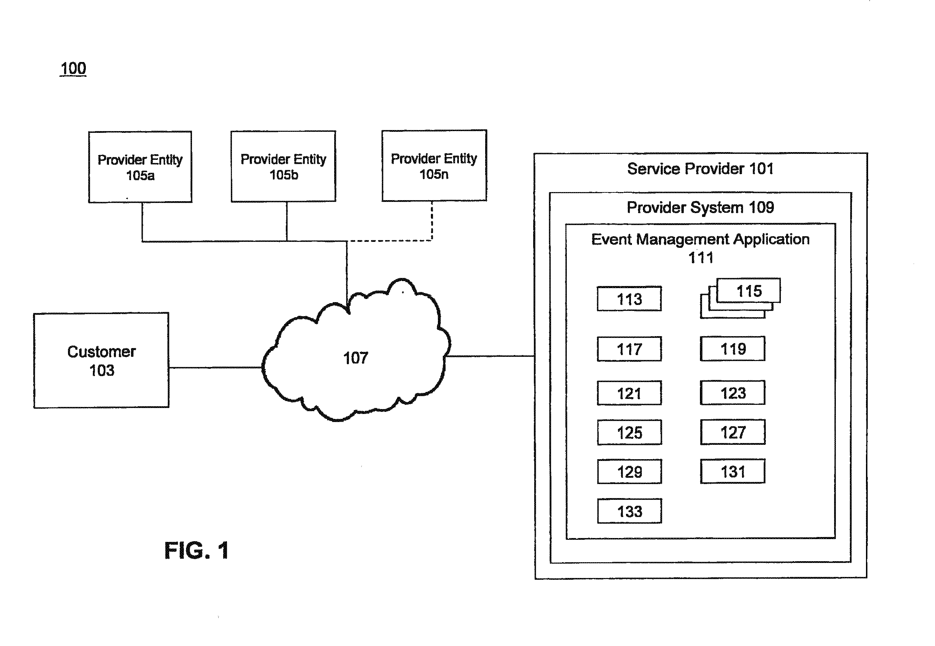

FIG. 1 illustrates an environment 100, which is an example of an environment wherein a system for managing event attendance packages and event attendance inventory may operate. In some implementations, environment 100 may include a service provider 101, a customer device 103, one or more third party provider systems 105a-105n, a network 107, and/or other elements. In some implementations, service provider 101 may be a hospitality program provider or other entity that organizes and facilitates attendance of events such as, for example, sporting events (e.g., the Olympics, the Super Bowl^{™}, or other sporting event), non-sporting events (e.g., conventions, political events, awards ceremonies) or other events. Service provider 101 may include a computer system 109, which may be or include one or more servers or other machines having one or more microprocessors or computer processors, associated computer memory (e.g., hard discs, primary memory, secondary memory, ROM, RAM, EPROM, EEPROM, magnetic discs, optical discs, volatile memory, non-volatile memory, and/or other memory), input/output elements, and/or other elements. Computer system 109 may be or include a localized or distributed computing environment capable of receiving, processing, manipulating, storing, sending, displaying, or other actions with respect to different types of data. Computing system 109 may support one or more databases, including relational databases, directories, or other data storage schemes for use with the features and functions described herein.

In some implementations, computing system 109 may support an event management application 111, which may be or include a software application having one or more modules for providing management of event attendance packages and event attendance inventory. For example, event management application 111 may include a user interface module 113 that supports the one or more graphical user interfaces 115 (GUIs) through which internal users, customers, provider entities, and/or other users interact with event management application 111. The one or more GUIs 115 may facilitate data/information receipt by event management application 111 (e.g., by users entering information into a field and/or manipulating data via a GUI 115), although data may otherwise be received by event management application 111 (e.g., receipt/importation of files, screen scraping of websites, or other data reception). Similarly, one or more GUI's 115 may provide data display features so as to provide data to various users.

In some implementations, event management application 111 may include a customer module 117 that receives, stores, and provides customer information relating to customers to which event attendance services are provided by service provider 101. In some implementations, the customer information may include a unique client number that is used to identify specific customers. In some implementations, the client numbers may be system-generated. In some implementations, the customer information may include additional details about a particular customer such as, for example, a primary contact person and/or contact information therefor, billing information, and/or other information.

Furthermore, in some implementations, event management application 111 may include an event package module 119 that receives, stores and provides event package information relating to event packages for customers. In some implementations, event package information may include a unique proposal number that is used to identify specific event packages, a unique account number used to identify a contract or proposal for a package, and/or other information. In some implementations, the event package information may include the identity and/or number of attendees for the package, requested inventory items (e.g., hotel, flights, food, ground transport, tickets, or other inventory items), or other information.

Event management application 111 may also include multiple modules associated with various "departments" used within service provider 101 for providing management of event attendance packages and event attendance inventory. For example, in some implementations, the one or more modules of event management application 111 may include a finance module 121 (as a corollary to a finance department), a ticketing module 123 (as a corollary to a ticketing department), an accommodations module 125 (as a corollary to an accommodations department), a food and beverage module 127 (as a corollary to a food and beverage department), a transportation module 129 (as a corollary to a transportation department) a management module 131 (as a corollary to a management department), a staffing module 133 (as a corollary to a staffing department), and/or other modules.

In some implementations, customer device 103 may be or include a computing device operated by a customer of service provider 101. Customer device 103 may be a server, a desktop computer, a laptop computer, a tablet computer, a smart phone, a personal digital assistant, a cell phone, or other computing device. The customer may contract with service provider 101 for the service provider to facilitate attendance at an event. Service provider 101 may facilitate such attendance by arranging for flights, hotel, meals, event tickets, ground transportation, and/or other items. As described herein, customers may include individuals, households, business entities, or other entities.

In some implementations, the customer may interface with event management application 111 (e.g., via one or more graphical interfaces 115) using customer device 103. While only one customer device 103 is illustrated, many customer devices may be capable of interfacing with management application 111. For example, service provider 101 may provide services to many different customers and/or single customers may utilize numerous customer devices 103.

In some implementations, third-party provider entity systems 105a-105n may be or include one or more computing systems of provider entities that provide inventory items or services relating to attendance of an event. For example, provider entities may include an airline company or travel agency that provides air-travel accommodations/reservations/services. Provider entities may also include hotels or travel agents that provide hotel accommodations or reservations. Provider entities may include ticket brokers, event ticket sales offices, or other entities that provide tickets to an event. Provider entities may also include dining establishments, caterers, or other food service providers or dining reservation providers that provide food or reservations at dining establishments. Other provider entities may also exist. In some implementations, one or more provider entities may each operate a computing system (i.e., a provider entity system 105), that may be or include, for example, one or more servers, desktop computers, laptop computers, tablet computers, smart phones, personal digital assistants, cell phones, or other computing devices. Service provider 101 may interact with these provider entity systems 105 to obtain inventory and/or information relating to inventory so as to provide event attendance services to customers.

In some implementations, customer devices 103 and provider entity systems 105 may interact with service provider 101 (specifically, service provider 101's computer system 109) via network 107. In some implementations, network 107 may be or include the Internet or the World Wide Web ("www"). In some implementations, network 107 may be or include a switching fabric that is part of a Wide Area Network (WAN), a Local Area Network (LAN), a cloud environment (e.g., a logical network), or other types of networks known to those of ordinary skill in the art (e.g., a TCP/IP network). In some implementations, network 107 may use or include wired, wireless, optical, or other types of communication links. While environment 100 illustrates interaction between customers and service provider 101 using computing devices and network 107, some interaction may occur (and therefore information may be received, sent, exchanged, etc., between customers and service provider 101) over a telephone, via traditional mail, via in-person interaction, or other communications. Similarly, interaction between provider entities and service provider 101 may occur (and therefore information may be received, sent, exchanged, etc., between provider entities and service provider 101) over a telephone, via traditional mail, via in-person interaction, or other communications.

Returning to the modules of event management application 111, in some implementations, finance module 121 may be integrated with (i.e., may communicate with) the other modules of event management application 111 (i.e., customer module 117, package module 119, ticketing module 123, accommodations module 125, food and beverage module 127, transportation module 129, management module 131, staffing module 133, and/or any other modules), thereby providing a system for inventory and package management that centers around finance module 121. In some implementations, some of the modules of event management application 111 may relate to a specific feature or inventory item type associated with event attendance. For example, ticketing module 123 stores and manages ticketing information relating to event tickets. Similarly, accommodations module 125 stores and manages information relating to accommodations (i.e., hotel rooms, home/condo rentals, etc.); food and beverage module 127 stores and manages information relating to meals and other food-related inventory items; transportation module 129 stores and manages information relating to flights, ground transport (e.g., trains, busses, taxis, limousines, etc.), ferries (or other boat-travel), or other travel-related inventory items. In some implementations, other modules of event management application 111 may manage implementation-related details for execution of customer guest attendance. For example, management module 131 stores and manages information related to scheduling associated with event packages (e.g., arrival/departure information, event schedules, etc.), while staffing module 133 stores and manages information for full-time, part-time, and temporary employees (e.g., information relating to hiring employment history, accreditation - resume, photo, training, etc.). As finance module 121 interfaces with all other modules of event management application 111, finance module 121 is the centerpiece for inventory and package management, as can be seen herein.

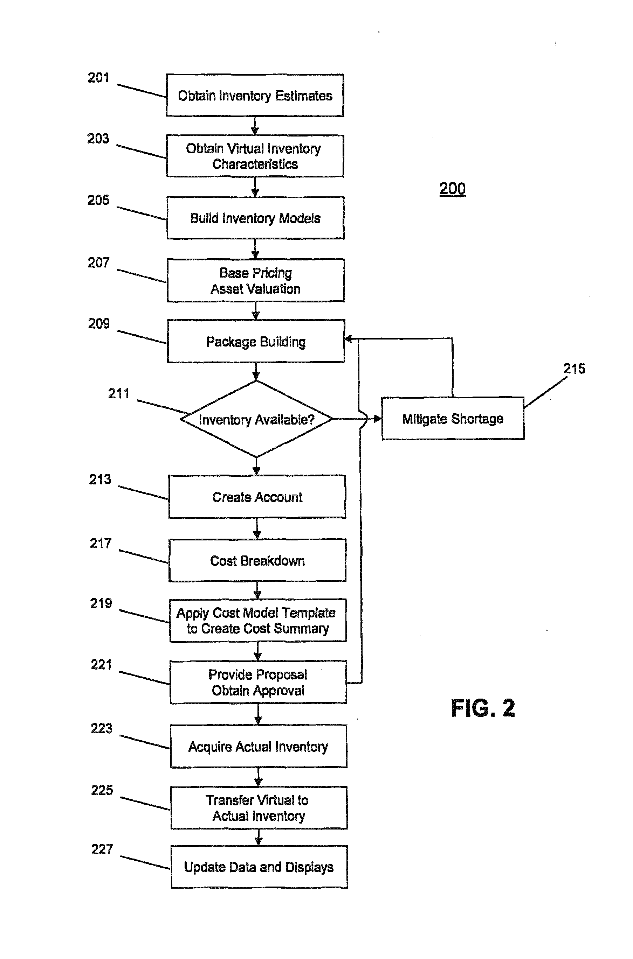

In some implementations, methods for managing event attendance packages and event attendance inventory for such packages are provided. FIG. 2 illustrates a process 200, which is an example of a process for managing event attendance packages and event attendance inventory, according to various implementations. In some implementations, process 200 may include an operation 201, wherein inventory estimates for a specific event are made. These estimations begin the process of inventory tracking that is necessary for successfully providing event attendance packages to customers.

Tracking of inventory is an important feature of event management application 111. The ability to enter virtual inventory (see discussion herein) to serve as a repository until actual inventory (see discussion herein) can be generated is critical in the early stages of an event. Tracking the movement of inventory to the smallest reference may prevent the loss of inventory, may prevent double booking, may save considerable time and effort, and/or may provide other advantages. Event management application 111 may place a burden on each department (and its specific module) to properly forecast, analyze and administer inventory controls and distribution for its specific inventory item type. In some implementations, each department (and therefore its specific module) may identify an inventory item's purchase price (cost) vs. the inventory item's sale price per client and therefore administer pricing controls and enable identification of the allocation of assets. Finance module 121 (i.e., the finance department) may facilitate the purchase of inventory items by allocating funds to acquire such items. Furthermore, finance module may support or otherwise utilize one or more graphical user interfaces 115 to enable internal personnel to enter/acquire base pricing values (i.e., the cost of an inventory item to service provider 101) and/or other values relating to inventory items. When such information is entered into or acquired by finance module 121 for a given inventory item (e.g., event tickets), it may be available or otherwise distributed to the module associated with the item's associated inventory item type (e.g., ticketing module 123, accommodations module 125, etc.). Accordingly, because finance module 121 is integrated with the other modules of event management application 111, finance module 121 enables close monitoring of how inventory items are managed by the individual departments. Features such as, alerts or notifications, and reports may be supported or utilized by finance module 121 that enable dissemination of such management information to relevant stakeholders/users. Finance module 121 essentially serves the other modules of event management application 111 as a central checkpoint to numerous processes (e.g., package building, inventory management, etc.)

In some implementations, event management application 111 may classify two distinct types of inventory items 1) virtual inventory and 2) actual inventory. "Virtual inventory" is a temporary holding place for an inventory item until it qualifies as an actual inventory item that can be allocated to a package/customer with confidence. Accordingly, "actual inventory" is an instantiated inventory item that can be allocated to a package/customer with confidence. In some implementations, the qualification of inventory as either virtual inventor or actual inventory may be based on milestones in the contracting process related to an inventory item. Furthermore, different milestones (or rules) may be used for different inventory types. For example, a seat for ground transportation (e.g., bus) from a hotel to an event venue may be transferred from virtual inventory to actual inventory when a ground transport provider entity provides service provider 101 with an official notification (e.g., from a provider entity system 105, over network 107, to event management application 111) that a seat has been reserved. The level of specificity for a reservation relating to this inventory is low as all of the seats on the bus may be interchangeable. Accordingly, there is no need for further specificity. Furthermore, the contracting arrangement between service provider and the ground transportation provider entity may be such that actual payment for the reservation need not be exchanged for the seat to be reserved such that the seat can be allocated to a customer/package with confidence. However, rules for a ticket for a certain sporting event may not be transferred from virtual inventory to actual inventory until a ticket provider entity provides service provider 101 with an official notification (e.g., from a provider entity system 105, over network 107, to event management application 111) that a specific seat location (e.g., section, row, and seat number) has been reserved. Because this information is important to the value of the ticket (and serves as confirmation that an actual ticket will be available), the ticket has higher specificity than the bus seat. Furthermore, the ticket providing entity may require that actual payment be made by service provider 101 before providing the ticket confirmation.

Returning to the description of process 200, operation 201 may include initiating an estimation of the inventory needed for a specific event. This may include identifying an estimated number of inventory items for each type of inventory item (e.g., hotel rooms, tickets) to be contracted for an event. This estimation may be made based on one or more sources of information, such as, for example, existing package information associated with the event (e.g., known information regarding what inventory customers will need or have actually requested as "requested inventory items"), prior package information associated with customers (e.g., information regarding what customers have required/requested in the past), and/or other information. In some implementations, these estimations may be performed for each inventory item type by the corresponding module for the inventory item type (e.g., ticketing module 123 formulates estimates for tickets; accommodations module 125 formulates estimations for rooms, etc.).

In an operation 203, virtual inventory may be built using the estimates inventory quantity from operation 201 as well as the likely availability of specific inventory items. As this operation involves at least a modicum of specificity regarding inventory items, one or more characteristics may be acquired and applied to each virtual inventory item (that is likely to be available (or known to be available, e.g., based on relationships with provider entities). For example, for accommodations, the number of rooms 5-Star, 4-Star and 3-Star rooms may be determined. Accordingly, each room in virtual inventory stored by accommodations module 125 may have a "star" characteristic, which may have a value of 1 star, 2, star, 3, star, 4, star or 5 star (other types of characteristic value parameters may be used). In some implementations, these and/or other characteristics (e.g., a room number, where a room is located in a building and/or with respect to a landmark, a rooms "view" of any such landmarks, a floor plan for the room, a number of beds and/or capacity, etc.) stored by accommodations module may be used to instantiate a number of virtual inventory rooms in accommodations module 125. As discussed below, in some implementations, these characteristics may be used in the creation of models for a property that provides a plurality of rooms to customers of service provider 101. As discussed herein, the models may be used for or by one or more graphical user interfaces 115 of event management module that enable a visual presentation and selection interface for users (internal users or customers) to build event packages (see e.g., operation 209 below). While models are discussed herein often in the context of accommodations, it should be understood that other inventory item types may be used to build models for item selection (or other purposes) as well.

Other inventory item types may have other characteristics. For example, event tickets may include section, row, and/or seat numbers. Air transportation reservations may include departure and arrival time, departure and arrival destinations, seat number, or other characteristics. In some implementations, not all characteristics of a virtual inventory item may be known. For example, a row and seat number for an event ticket may not be available until the actual purchase of a ticket and therefore such characteristics are not initially available.

In some implementations, the characteristics associated with initially instantiated virtual inventory items may serve as the temporary placeholders until actual characteristics of available inventory items are identified (e.g., specific provider entities have been identified and the actual characteristics of, for example, a hotel room, are known).

In an operation 205, in some implementations, as discussed above, once actual characteristics of a virtual inventory item are known, a detailed model of one or more of the virtual inventory items may be constructed. These models may be used with one or more graphical user interfaces to provide users with the ability to navigate a virtual inventory Item and/or otherwise visualize its characteristics. For example, in some implementations wherein a number of hotel rooms is are available in a certain hotel or other property, a detailed model of the property, the rooms, and their amenities may be constructed. These models may consist of diagrams, lists, pictures, and/or other visual representations of the property/room details. A model building utility that is part of accommodations module 125 may be used to construct such models. This utility may "build" the property according to the number of rooms available to service provider 101 for a selected event period. In some implementations, the model may simply be a file providing the details regarding the virtual inventory items. For example, if a 3 Star property contains 500 rooms available to service provider 101, a file may be constructed that contains representations 500 rooms multiplied by the total number of days associated with the event (including the pre-event, event and post-event periods). Accordingly, the file enables event management system 111 to accurately track inventory per room and room night.

The resultant models/files may be used by or become part of one or more GUIs 115 that may be navigated by customers and/or internal users. In some implementations, the GUIs providing such models may receive selections of inventory items for reservation (e.g., a customer or internal user may select a particular inventory item such as, for example, a hotel room, through browsing of the model via a GUI 115). Use of such models need not be limited to accommodations, as ticketing (e.g., a model of a stadium), food and beverage (e.g., a model of a restaurant), transportation (e.g., a model of an airplane), and other inventory items may be represented using models.

Returning to the description of process 200, after virtual inventory items are identified, each inventory item may undergo base pricing in an operation 207. For example, for accommodations, base pricing may be performed per room type and price per each additional occupant. In some implementations, base pricing may utilize finance module 121, but the specific base pricing data for virtual inventory items may be stored by each individual inventory item type module. A "base price" for an inventory item is an estimated cost of the item to service provider 101 (i.e., what a service provider will likely pay a provider entity for an inventory item). The pricing structure is primarily utilized for assessing the value of virtual inventory assets that are used during the construction of an event package. An "asset price" represents the actual value of an inventory item as an individual piece in an asset package (i.e., what a customer will be charged for an inventory item as part of a package). This pricing structure is used primarily by each module corresponding to each individual inventory item type to assess or estimate the cost for the requested inventory when packages are being constructed and inventory items are being requested.

In some implementations, base and asset prices are for different available inventory items are explored (i.e., different inventory items of the same type, perhaps with different prices, perhaps from different provider entities, are investigated) until it can be determined numbers are deemed realistic and sufficiently allow for accurate and profitable margins. In some implementations, base pricing may be handled by finance module 121, while storage and management the asset prices for each specific inventory item type may be handled by the specific modules for each inventory item type.

In an operation 209, event package may be built for a given customer. An event package may include a collection of one or more inventory items to be provided to or for the benefit of a customer attending the event. In some instances, the event package building process may include a customer building their package using the one or more GUIs 115 of event management application 111. In some instances, the package building process may include an internal user interacting with one or more GUIs 115 of event management system at the instruction of or otherwise on behalf of a customer.

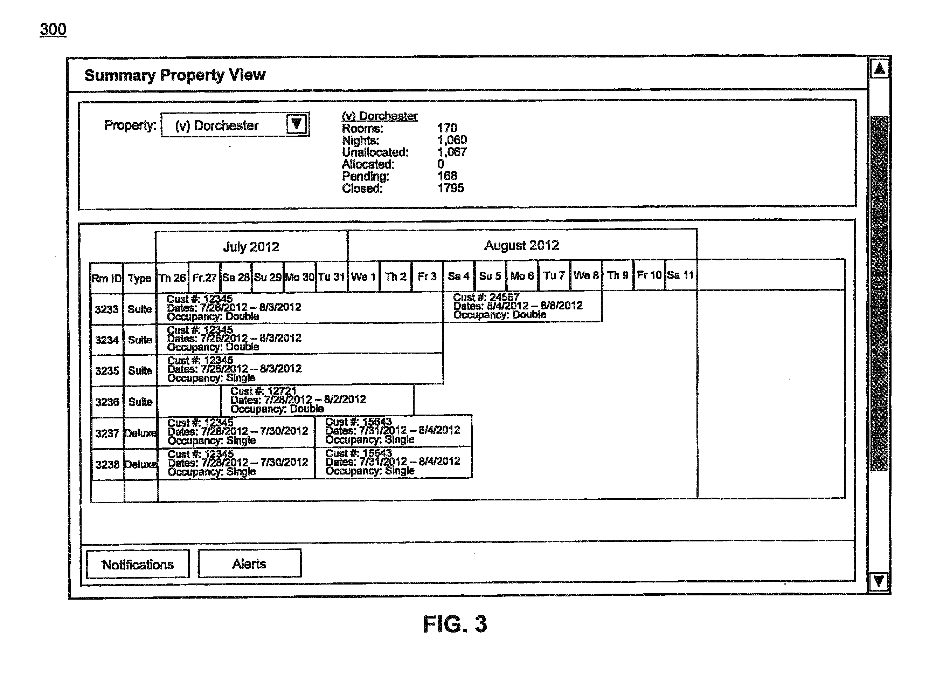

In some implementations, when an event package is being built, a customer or an internal user selects inventory items they want for the package. These are the "requested inventory items" that will form the event package. The one or more interfaces 115 provide information regarding available virtual inventory items (and in some instances actual inventory items) that can be navigated and selected by the customer or internal user for addition to a package. FIG. 3 illustrates graphical user interface 300, which is an example interface of event management application 111 that illustrates available inventory items (in this example, hotel rooms at a specific property) and enables users to allocate such inventory items to customer event packages. An internal user may, at the direction or instruction of a customer, utilize an interface such as interface 300 to view which rooms are booked and which are available and therefore may allocate available hotel rooms to their specific event package. Requested inventory item selections are stored the appropriate module associated with a requested item's inventory item type, as well as noted as part of an event package in package module 119.

In some implementations, before an event package enters the contracting stage (wherein a binding agreement regarding provision of a customer package in exchange for payment is pursued; prior to arriving at an agreement for provision of an event package, the event package is considered a "proposal"), finance module 121 verifies the entire set of requested inventory items. To do this, finance module 121 interfaces, In an operation 211, with each of the individual inventory type modules associated with requested inventory (e.g., ticket module 123, accommodation module 125, food and beverage module 127, transportation module 129, etc.) and determines if virtual inventory (or, in some instances, actual inventory) exists to satisfy the requested inventory items. If the entire package can be satisfied, in an operation 213, an account is created for the package that initiates the contracting process between service provider 101 and the customer associated with the package. In some implementations, the account includes an account number that may be used to track an event package throughout its life cycle. If the entire package cannot be satisfied, an account is not created due to the shortage of inventory in one or many departments and shortage mitigation steps are taken in an operation 215. For instance, if an event package is built wherein a customer requests inventory of 10 rooms, but only 3 rooms remain in virtual inventory for this specific inventory item, a shortage of inventory notification generated and provided to the user selecting user (e.g., the customer or internal user) via a GUI 115. This information is intended as an FYI to the user and will not prevent the proposal from being constructed in its entirety. Additional space may exist in other accommodations (e.g., if the customer requests 3-star rooms, 4-star or 5-star rooms may be used to satisfy the request, but may cost more). Accordingly, the user (e.g., customer or internal user) may be prompted to search for inventory items having different characteristics from those initially requested. If no alternative inventory can be found (or is accepted), the shortage of inventory must be corrected before the proposal can become an account and move to the contracting stage.

After it has been determined that the requested virtual inventory exists to satisfy the requested inventory items of the event package, the event package may move from the proposal stage into the contact stage.

In some implementations, during the construction of event packages, the established pricing (e.g., base pricing, asset value, or other pricing terms) for an inventory item may be automatically displayed on a GUI 115 when the type of item is selected (e.g., by "clicking" on an item displayed in the GUI) during the building of an event package. In some implementations, after a package is built (either before or after account creation in operation 213) a "cost breakdown" may be constructed (e.g., in an operation 217) for the package. In some implementations, this cost breakdown may be displayed to internal users via one or more GUIs 115. In some implementations, the cost breakdown may be initially created during the beginning of package building (e.g., in operation 209) and my be populated and updated as package building occurs.

The "cost breakdown" may provide, in detail, base pricing for the specific items and all relevant cost calculations for all goods and services of specific package. The cost breakdown may also include (but is not limited to), percentages, ratios, and taxes applied to the base pricing and may include other information. The cost breakdown permits a qualified user (i.e., an authorized internal user) to add a new line items (i.e., inventory items) or modify existing line items. These itemizations may be divided by department and further divided into smaller subsections where necessary. As is apparent, the cost breakdown may be viewable only by authorized internal personnel, as it provides information that service provider 101 would not want customers to access (e.g., provider information, base prices, taxes, etc.).

However, in some implementations, in an operation 219, the cost breakdown may be used to produce a "cost summary" that may by provided to customers. The cost summary may be produced by applying a cost model template (a customer pricing structure) to the cost breakdown and arriving at final asset values for costs of goods and services to be provided to the customer (as well as, in some implementations, a total package charge). The cost model template may take the raw, base pricing and itemization information for all inventory items that form part of a specific event package and apply one or more markups, discounts, and/or other modifications to arrive at the customer price (in some implementations, including the asset values for each inventory item) for a package (which is provided to the customer as the cost summary). In some implementations, different cost model templates may be created and used in different circumstances. For example, different cost model templates may be created and used for different customer types (e.g., corporate, individual, VIP, VVIP, etc.). In some implementations, different cost model templates may be created and used for different event types. Other customizations may also be made to cost model templates.

In some implementations, after virtual inventory matched to requested inventory for a package, the customer may be provided, in an operation 221, with a proposal regarding the package and may be requested to provide approval. In some implementations, this proposal may include the cost summary for the package. The customer may then provide approval for the package and my provide such approval to service provider 101 (e.g., the customer may utilize a customer device 103 to provide such approval to event management application 111 via network 107). If the customer does not approve of the package, the customer may forego purchasing a package or process 200 may return to an operation 209 wherein the package is modified or re-built. As will be appreciated by those having skill in the art, the proposal may be sent at different times with respect to the overall process described herein, process 200 being only an example of the order of such occurrence.

In an operation 223, individual departments associated with inventory item types (in some implementations, with assistance by their corresponding modules) begin fulfilling requirements for requested inventory items of the package and therefore building the actual inventory. Building of actual inventory may include utilizing each requested inventory item that has been matched with a corresponding virtual inventory item to obtain corresponding actual inventory items to satisfy the requested inventory items. In some implementations, obtaining actual inventory may include the individual modules of event management application 111 associated with specific requested inventory item types interacting with provider entity systems 105 to obtain reservations, tickets, flights, etc. Other methods of obtaining actual inventory may also be used. Processes that can be used to update individual modules of event management application 111 with actual inventory information may include: manual data entry, batch upload, electronic data interchange (EDI), and/or other data input methods.

Each different module for different inventory item types then stores the information regarding obtained actual inventory items. For example, requested rooms (including for example, confirmations, contracts, details, etc.) in a given hotel property are stored by the accommodations module with the total number of rooms and equivalent star rating or other characteristics. In some implementations, characteristics (e.g., the star rating) will enable the rooms to be matched with their virtual inventory counterpart. Then the actual rooms fulfilling those requested rooms are obtained and instantiated as actual inventory. If the number of actual inventory for these rooms (with equal characteristics) exceeds the total number of requested rooms, steps may be taken to allocate the actual rooms to packages.

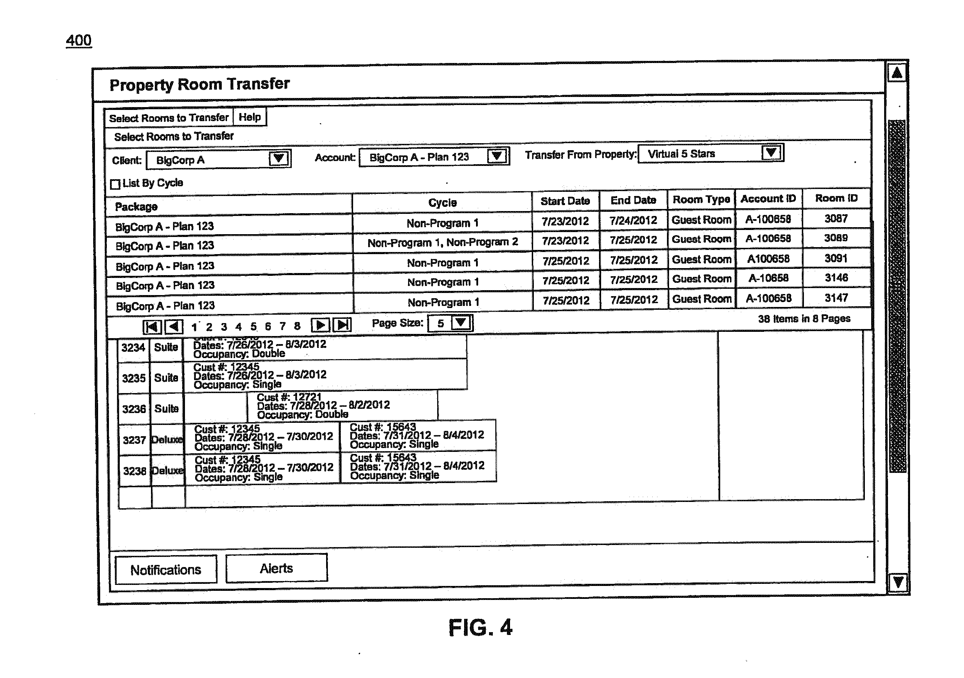

Once the actual inventory items are acquired to satisfy the requested inventory items, the module for each inventory item type, in an operation 225, may be used to or may itself transfer their virtual inventory items to actual inventory items. In some implementations, this may occur using one or more of the GUIs 115 of event management application 111. In some implementations, this screen may enable the user to enter the data. In some implementations entry of the data may include a "drag and drop" procedure, wherein the user selects an inventory item using, for example, a mouse or touchpad, "drags" the inventory item from the virtual inventory, and "drops" it into the actual inventory. In some implementations, this operation may involve internal users only, due to the fact that it affects the status of inventory items available to other packages. FIG. 4 illustrates graphical user interface 400, which is an example interface of event management application 111 that illustrates an automated inventory transfer grid for accommodations module 125 (similar grids may be used with other inventory item types and their corresponding modules).

In some implementations, when the transfer from virtual to actual inventory item is completed or inventory is otherwise allocated to a contracted package, the inventory item no longer exists as virtual inventory and therefore can no longer be correlated with a requested inventory item. In some implementations this fact may be instantly reflected on all GUIs 115 supported by event management application 111 (in an operation 227), and therefore any other users (e.g., customers or internal users) will not be able to apply such virtual inventory to a different package. The individual modules for the given inventory type will store the allocation of actual inventory, the deletion of the item from virtual inventory and the satisfaction of a requested item of inventory accordingly. Similarly, the event package to which the actual inventory is allocated (and the account updated for contracting purposes) will be updated in package module 119.

In some implementations, the following status codes may be associated with (and in some instances displayed with) inventory items and may be utilized to determine the availability of virtual and actual inventory: A - Allocated (actual inventory has been allocated to a package); U - Unallocated (actual inventory has not been allocated to a package); D - Department Hold (inventory, regardless of status, reserved); H - Temporary Hold (inventory sale pending); B - Blackout Dates (not available for allocation in any circumstance); P - Proposal Hold (Client Review status only); S - Shift (Transportation only); Y - Consignment; C - Closed (Virtual only). Other status indicators may also be used. In some implementations, these statuses may be represented one or more GUIs 115 that display the inventory of service provider (each individual module associated with individual inventory item types may provide their stored data for creation of such GUIs). For example, a GUI showing a grid of rooms may include those blacked out (indicated using "B"), allocated (using "A"; may also include client ID, proposal number, or account number), unallocated (indicated using "U"), and/or other status codes.

In some implementations, service provider 101 may obtain actual inventory prior to allocation to a package. Accordingly, although virtual inventory is discussed as being used to satisfy requested inventory items of event packages, actual inventory may also be used. For example, a given provider entity may not make inventory items available unless they have been pre-purchased (or at least subject to a binding commitment for purchase). Therefore, actual inventory may be obtained prior to package building, in some instances.

After the inventory has been allocated and actual inventory exists for each requested inventory of an event package, the package is ready to be executed. Execution of the package may include billing the customer for the inventory items, delivering paperwork or items associated with inventory items to a customer (e.g., mailing tickets, providing confirmation numbers, flight itineraries or confirmations, restaurant reservation details, etc.), and/or other operations relating to facilitation of customer event attendance. For additional information regarding event attendance facilitation, including pre-event operations, in event operations, and post event operations, see U.S. Patent Application Publication No. 20070039024, entitled "Olympic Event Hospitality Program Management System" and U.S. Patent Application Publication No. 20070038503, entitled "Method for Olympic Event Hospitality Program Management," the contents of both of which are hereby incorporated by reference herein in their entirety.

It should be noted that, in some implementations, inventory items may include the assistance of personnel to facilitate a customer's use or enjoyment event attendance (e.g., a concierge service, limo driver, etc.). In some implementations, these personnel-related inventory items or other inventory items may be employed by or obtained by service provider 101.

As described herein, each department (and therefore each inventory item type related module) may enable entry, tracking, maintenance of its specific inventory type. For example, accommodations module 125 enables management of hotel rooms (or other accommodations, e.g., condos or rental houses), including management of entire "properties" that include multiple rooms. Furthermore, similar to other inventory item type modules, accommodations module 125 may manage guest assignments and allocations/status of accommodations and may also generate reports regarding this data. Users (e.g., a customer or an internal user) may enter information regarding customers, packages, and specific inventory items via one or more GUIs 115 that may utilize numerous fields, buttons, directory trees, menus, and/or other screen options. For example, in some implementations, company ABIs (additional budget items) may be used, which allow external and internal users to add one inventory type (e.g., event tickets, accommodations, additional transfers, etc.) to an existing package through the use of one or more GUIs 115 by dismantling the package and re-pricing it. ABIs can execute directly from the client or internally via one or more GUIs. Inventory item base pricing, inventory item asset pricing, listing of virtual inventory items, listing of actual inventory items, invoicing product building (allowing for direct sale of inventory items to clients, with out package construction), e-commerce (assignment of inventory items for automated package building, and/or operations may also be conducted using one or more GUIs 115 that associate with individual modules for inventory item types. As discussed herein, each individual inventory item type module may be completely integrated with finance module 121 for the building of virtual inventory, inventory item pricing, and assignments to event packages. In some implementations, these modules may be linked using the client number for a given customer and the proposal number for a given event package.

Returning to the example of accommodations module 125, basic information regarding a property that includes a number of rooms (i.e., inventory items) may include the number of rooms, the address of the property, and/or other information. As this information applies to the entire property, it will be associated with the entirety all of the inventory items associated with the property. Often times, hotel properties do not provide room details (particularly more than 30 days from the date of use) such as, for example, room numbers, room types, occupancy, amenities, floor numbers, or other information. However, this information may be important to properly assign guests to rooms that meet their physical needs or registration requests. To enable these types of property details to be captured by accommodations module 125 (or other module) in an expeditious manner, manual or electronic processing methods may be used to input rooming (or other inventory item type) detail information. The manual process consists of a screen process to parse and identify the specific room (or other inventory item types) types and within these parameters establish the amenities, room view, bed configurations and location (or other characteristics). The electronic process involves entering the room detail (or other inventory item type detail) information into, for example, an MS Excel^{™} spreadsheet that is imported into accommodations model (or other module) for the property. For example, in some implementations, property owners can preload such spreadsheets having relevant information about a property therein and provide it to the accommodations department of service provider (who load it into accommodations module 125). Once received, this information may be used to construct the aforementioned model of the actual property. Similar processes may be used for tickets, transportation and other types of inventory items.

As discussed herein, the ability to reserve inventory items is a process that is managed by all individual modules for inventory item types. Often times a given inventory type module may require portions of their inventory to be set aside for internal use or to control the quantity of inventory available for sale. Each module/department may include an inventory reservation GUI from GUIs 115 to enable inventory to be removed from an 'available' status and placed into a temporary department hold status (e.g., through user interaction with the GUI). Furthermore, an inventory release GUI may also be provided in one or more GUIs 115 to enable the inventory placed into a temporary department hold status to be released for general use and/or sale (e.g., by user interaction with the GUI).

Tracking the movement of inventory items between available, reserve and hold statuses occurs continuously with each department's virtual and actual inventory. For example, in some implementations, a proposed event package may be placed into a "client review" status. This may be because the proposed package has been sent to the customer to approve (and thereby create a binding contract). See, for example, operation 219 of process 200. Accordingly, the virtual or actual inventory items that have been matched to requested inventory items of the package may be placed into a "proposal hold" until such time the client has agreed to the package components. When the package is signed by the client, the package status is changed to "accepted" and the previous temporary hold placed on the proposal inventory is permanently reserved against asset Inventory by the departments required to manage package assets. However, even though the hold is placed on the inventory items, the items may be considered "allocated" to the package so that they are not sent to another package during this time. In some implementations, a time limit may be placed on the hold status of inventory items so as to maintain fluidity of inventory.

Once an inventory item is incorporated into an event package, they cannot be allocated to other packages (see above description regarding the update of GUIs 115 reflecting this status). Although these packaged items have not been sold, the individual assets that comprise these packages will be reserved with a temporary 'hold' to prevent the inventory assets from being otherwise allocated or transferred away from the initial package. If an individual asset from a package is required to meet demand in another package, the initial package must be dissolved (e.g., via a dismantling tool) to release and return each of its specific inventory items to an 'available' status to enable the asset to be transferred.

Although rooms and other inventory items are generated for each day of a defined pre-event, event and post-event periods, the dates in which the room or other inventory item is actually available may vary. To account for this, a utility is provided to place rooms or other inventory items into a "department hold" to reserve them or "black out" to define dates in which the room or other inventory item is simply not available. This may automatically reduce the number of inventory items available and accurately reflect the true count of inventory items available per event period. Using accommodations as an example, prior to applying a reservation to a room within virtual or actual assets, the number of room nights (each an inventory item) must equate to the established minimum stay rules for the room (if such rules exist). This process will prevent a room that is acquired for specified time period (5 nights) from receiving a reservation with a shorter stay, thus creating unsold room nights. For additional information regarding the event periods discussed herein and other additional information regarding event management systems, see U.S. Patent Application Publication No. 20070039024, entitled "Olympic Event Hospitality Program Management System" and U.S. Patent Application Publication No. 20070038503, entitled "Method for Olympic Event Hospitality Program Management," the contents of each of which are hereby incorporated by reference herein in their entirety.

In instances wherein a customer desires to utilize their own inventory items, which may include rooms, meals, event tickets and transportation, and/or other inventory items, they may request that service provider 101 provide personnel to manage these inventory items. Managing the inventory items may vary in scope of services depending upon client need. To enable the affected departments and corresponding modules to properly manage this inventory, it may be necessary to incorporate the client's inventory with the inventory items of service provider 101. Although this may seem drastic, the internal tracking mechanisms within event management application 111 can effectively differentiate between "management only" inventory and service provider 101's inventory to prevent skewed reporting of room counts, financials, etc.

In some implementations, event management module 111 enables customers or internal users to search the data of event management application 111 and/or its constituent modules. In some implementations, the scope of a given search may be limited by one or more factors such as, for example, the type of user (e.g., a customer may only be able to search for their own packages or for a subset of the data relating to their own packages; an administrative internal user may be able to search all of the data in event management application 111). Searches can be performed to locate specific customers (e.g., using their client number or other customer information), a specific package (e.g., using a proposal number or other package information), and/or other searches may be performed. These searches may be used for or as part of one or more notifications, alerts, and/or reports regarding any of the data received, stored, manipulated, and/or displayed by event management application 111. In some implementations, when a search is performed for a specific customer, historical information for that customer may be displayed including details of any present or past event packages associated with the customer. In some implementations, a comparison between event packages for a given customer may be performed (e.g., between two or three different event packages) to provide references to past event information and a comparison of a present event package to previous event packages as well as recommendations for a package to the next event, if available.

Implementations described in this disclosure may be made in hardware, firmware, middleware, software, or various combinations thereof. The technology disclosed herein may also be implemented as computer-readable instructions stored on a tangible computer-readable storage medium which may be read and executed by one or more processors. A computer-readable storage medium may include various mechanisms for storing information in a form readable by a computing device. For example, a tangible computer-readable storage medium may include optical storage media, flash memory devices, and/or other storage mediums. Further, firmware, software, routines, or instructions may be described in the above disclosure in terms of specific exemplary aspects and implementations of the technology, and performing certain actions. However, it will be apparent that such descriptions are merely for convenience, and that such actions may in fact result from computing devices, processors, controllers, or other devices executing firmware, software, routines or instructions.

The systems described herein are exemplary system configurations. Other configurations may exist. Those having skill in the art will appreciate that the invention described herein may work with various configurations. Accordingly, more or less of the aforementioned system components may be used and/or combined in various embodiments. Furthermore, various operations of the methods described herein, while described in a particular order, may be performed in different orders as would be appreciated by those having skill in the art. In some embodiments, more of less of the described operations may be used.

Other implementations, uses, and advantages of the disclosed technology will be apparent to those skilled in the art from consideration of the specification and practice of the invention disclosed herein. The specification should be considered exemplary only, and the scope of the technology disclosed herein is accordingly intended to be limited only by any associated claims.

## Claims

1. A method for managing event attendance packages and related inventory, the method being executed by one or more processors configured to perform one or more operations comprising:
storing package information relating to one or more event packages for attending an event, wherein the package information for each of the one or more event packages includes customer identification information for a customer associated with the event package and information regarding requested inventory items relating to attendance of the event;
storing inventory information regarding a plurality of inventory items relating to attendance of the event;
providing at least one graphical user interface that displays the inventory information and the package information;
receiving, through the at least one graphical user interface, inventory assignment information regarding one or more inventory items, wherein the inventory assignment information includes an indication to allocate the one or more inventory items to at least one event package of the one or more event packages;
assigning a status to the one or more inventory items according to the inventory assignment information, wherein the status includes an indication of the one or more inventory items as allocated to the at least one event package; and
displaying, on the at least one graphical user interface, an indication of the status of the one or more inventory items.

2. The method of claim 1, wherein the event includes one or more of a sporting event, a social event, a political event, or a business-related event; and/or
wherein the plurality of inventory items include one or more of: flight reservations, hotel reservations, event tickets, meal reservations, meal vouchers, or ground transportation tickets; and/or
wherein the package information for each of the one or more packages further includes a projected attendance information regarding one or more persons who are scheduled to attend the event and wherein the information regarding requested inventory items is derived from the projected attendance information.

3. The method of claim 1, wherein the inventory information includes information relating to actual inventory items and virtual inventory items, wherein the actual inventory items are inventory items that have been obtained or reserved, and wherein the virtual inventory items are inventory items that have not yet been obtained or reserved.

4. The method of claim 3, wherein storing package information relating to one or more event packages further comprises receiving the requested inventory items and matching the requested inventory items with corresponding virtual inventory items.

5. The method of claim 4, wherein receiving inventory assignment information, includes receiving an indication that a virtual inventory item that has been matched with a requested inventory item is to be converted to an actual inventory item because the actual inventory item has been obtained or reserved.

6. The method of claim 5, wherein displaying an indication of the status of the one or more inventory items include displaying an indication that a virtual inventory item has been matched with a requested inventory item and therefore is no longer available for use in a second event package.

7. The method of claim 1, wherein receiving inventory assignment information further comprises receiving the inventory assignment information through one or more of manual data entry through the graphical user interface or a drag and drop action on the graphical user interface; optionally
wherein a user provides the inventory assignment information by dragging a virtual inventory item onto a representation of the at least one event package.

8. A system for managing event attendance packages and related inventory, comprising:
at least one memory device that receives and stores:
package information relating to one or more event packages for attending an event, wherein the package information for each of the one or more event packages includes customer identification information for a customer associated with the event package and information regarding requested inventory items relating to attendance of the event, and
inventory information regarding a plurality of inventory items relating to attendance of the event; and
one or more processors configured to:
provide at least one graphical user interface that displays the inventory information and the package information,
receives, through the at least one graphical user interface, inventory assignment information regarding one or more inventory items, wherein the inventory assignment information includes an indication to allocate the one or more inventory items to at least one event package of the one or more event packages,
assign a status to the one or more inventory items according to the inventory assignment information, wherein the status includes an indication of the one or more inventory items as allocated to the at least one event package, and
display, on the at least one graphical user interface, an indication of the status of the one or more inventory items.

9. The system of claim 8, wherein the event includes one or more of a sporting event, a social event, a political event, or a business-related event; and/or
wherein the plurality of inventory items include one or more of: flight reservations, hotel reservations, event tickets, meal reservations, meal vouchers, or ground transportation tickets; and/or
wherein the package information for each of the one or more packages further includes a projected attendance information regarding one or more persons who are scheduled to attend the event and wherein the information regarding requested inventory items is derived from the projected attendance information.

10. The system of claim 9, wherein the inventory information includes information relating to actual inventory items and virtual inventory items, wherein the actual inventory items are inventory items that have been obtained or reserved, and wherein the virtual inventory items are inventory items that have not yet been obtained or reserved.

11. The system of claim 10, wherein storage of package information relating to one or more event packages further comprises receipt of the requested inventory items and identification of the requested inventory items that match with corresponding virtual inventory items.

12. The system of claim 11, wherein receipt of inventory assignment information, includes receipt of an indication that a virtual inventory item that has been matched with a requested inventory item is to be converted to an actual inventory item because the actual inventory item has been obtained or reserved.

13. The system of claim 12, wherein display of an indication of the status of the one or more inventory items includes display of an indication that a virtual inventory item has been matched with a requested inventory item and therefore is no longer available for use in a second event package.

14. The system of claim 8, wherein receipt of inventory assignment information further comprises receipt of the inventory assignment information through one or more of manual data entry through the graphical user interface or a drag and drop action on the graphical user interface; optionally
wherein a user provides the inventory assignment information by dragging a virtual inventory item onto a representation of the at least one event package.

15. A method for managing event attendance packages and related inventory, the method being executed by one or more processors configured to perform one or more operations comprising:
instantiating a plurality of virtual inventory items relating to attendance of an event;
receiving a set of one or more requested inventory items for an event package;
for each requested inventory item from the set of requested inventory items, determining if the requested inventory item can be correlated to a virtual inventory item from the plurality of virtual inventory items;
when each requested inventory item of the set of requested inventory items can be correlated to a virtual inventory item, providing a proposal to a customer for an event package, the event package comprising the set of requested inventory items, the proposal including price information for the set of requested inventory items;
when approval of the proposal is received from the customer, obtaining an actual inventory item for each requested inventory item from the set of requested inventory items; and
removing a virtual inventory item from the plurality of virtual inventory items when an actual inventory item corresponding to a requested inventory item is obtained, the removed virtual inventory item corresponding to a correlated requested inventory item.

16. A system for managing event attendance packages and related inventory, comprising:
at least one memory device that receives and stores:
plurality of virtual inventory items relating to attendance of an event; and
one or more processors configured to:
receive a set of one or more requested inventory items for an event package, for each requested inventory item from the set of requested inventory items, determine if the requested inventory item can be correlated to a virtual inventory item from the plurality of virtual inventory items,
when each requested inventory item of the set of requested inventory items can be correlated to a virtual inventory item, provide a proposal to a customer for an event package, the event package comprising the set of requested inventory items, the proposal including price information for the set of requested inventory items,
when approval of the proposal is received from the customer, obtain an actual inventory item for each requested inventory item from the set of requested inventory items, and
remove a virtual inventory item from the plurality of virtual inventory items when an actual inventory item corresponding to a requested inventory item is obtained, the removed virtual inventory item corresponding to a correlated requested inventory item.
